# EUROPÄISCHE PATENTSCHRIFT

(11) **EP 0 979 707 B1**
(45) Veröffentlichungstag und Bekanntmachung des Hinweises auf die Patenterteilung: **24.09.2003**
(21) Anmeldenummer: 99114888.3
(22) Anmeldetag: 30.07.1999
(51) Int. Cl.: B23Q 1/03

(54) **Vorrichtung zum Bearbeiten plattenförmiger Werkstücke, insbesondere zur Beschichtung**
Device for the working of flat workpieces, in particular for coating
Dispositif pour le traitement de pièces en forme de plaques, en particulier pour leur revêtement

(30) Priorität: 11.08.1998 DE 19836219
(43) Veröffentlichungstag der Anmeldung: 16.02.2000
(73) Patentinhaber: Robert Bürkle GmbH, 72250 Freudenstadt (DE)
(72) Erfinder: Bohn, Hans, 72996 Schopfloch (DE)
(74) Vertreter: Brommer, Hans Joachim, Dr.-Ing.

(56) Entgegenhaltungen:
- DE-A- 19 526 138
- DE-A- 19 611 754
- US-A- 5 013 178

## Beschreibung

Die Erfindung betrifft eine Vorrichtung zum Bearbeiten plattenförmiger Werkstücke, insbesondere zur Beschichtung von Möbelteilen, mittels eines Auflegersystems, das eine Grundplatte mit zahlreichen Öffnungen aufweist, in denen Auflagebolzen zur Aufnahme der Werkstücke zumindest zwischen einer unteren passiven Position und einer oberen, die Werkstükke in ihrer Bearbeitungsposition tragenden Position verfahrbar sind, wobei die Position der Auflagebolzen auch davon abhängt, ob sie von einem Werkstück belegt sind oder nicht.

Hauptanwendungsfall ist das Beschichten dreidimensionaler Werkstücke, insbesondere Möbelteile, die nicht nur an ihrer Front, sondern auch an den umlaufenden Seitenkanten mit einer Kunststofffolie, einem Furnier oder dergleichen beschichtet werden sollen. Das Beschichten erfolgt durch Anwendung von Wärme und Druck in einer Presse. Um deren Kapazität optimal zu nutzen, werden meist mehrere Werkstücke gleichzeitig in einer gemeinsamen Legepalette dem Auflegersystem der Presse zugeführt und dort gemeinsam beschichtet. Nach dem Verlassen der Presse werden die Werkstücke dann durch Ausschneiden aus der zusammenhängenden Folie vereinzelt.

Damit die Kunststofffolie, das Furnier oder dergleichen nicht nur an die Front der Werkstücke, sondern auch an die davon zurückspringenden Seitenflächen, insbesondere an deren unteren Rand, gut angelegt werden kann, müssen die Werkstücke ein Stück von der sie tragenden Grundplatte abgehoben werden. Dies geschieht durch die genannten Auflagebolzen, die in eine obere Position verfahren werden und dadurch die Werkstücke anheben. Dadurch können auch die Seitenflächen der Werkstücke vollflächig beschichtet werden.

Allerdings ist es störend, wenn auch solche Auflagebolzen hochfahren, die nicht von einem Werkstück belegt sind, weil die Folie beim anschließenden Beschichtungsvorgang an diesen freistehenden Bolzen haften bleibt und das anschließende Entfernen der Folie umständlich und zeitraubend ist.

Es ist daher durch die EP-A 744 280 bekannt, die Auflagebolzen als Steuerventile auszubilden, derart, dass sie an ihrem oberen Rand gegenüber der sie umgebenden Grundplatte einen Ringspalt aufweisen. Dieser Ringspalt wird bei denjenigen Auflagebolzen, die ein Werkstück tragen, von der Werkstück-Unterseite abgedeckt, also verschlossen, wogegen er bei den nicht belegten Auflagebolzen frei bleibt. Auf diese Weise werden bei Druckluftbeaufschlagung der Auflagebolzen von unten automatisch nur diejenigen Auflagebolzen hochgefahren, die ein Werkstück tragen, wogegen die unbelegten Auflagebolzen in der unteren Passivposition verharren.

Allerdings hat diese Lösung einen relativ hohen Druckluft-Verbrauch und beim Hochfahren einer großen Anzahl von Auflagebolzen ― häufig sind über tausend Bolzen in einer Grundplatte montiert ― ist nicht gewährleistet, dass alle Auflagebolzen zur gleichen Zeit und mit gleicher Geschwindigkeit hochfahren, da die zu überwindenden Reibungskräfte an den einzelnen Bolzen unterschiedlich sind. Auf Grund dessen besteht die Gefahr, dass sich die einzelnen Werkstücke während des Hubvorganges relativ zueinander verschieben, sodass die vorgeschriebenen Mindestabstände zum Nachbarwerkstück nicht mehr eingehalten werden.

Zur Beseitigung dieser Probleme wird in der DE 197 18 561 der gleichen Anmelderin vorgeschlagen, die Auflagebolzen schon vor ihrer Belegung in der oberen Position zu halten und danach die unbelegten Auflagebolzen abzusenken.

Neuere Untersuchungen der Anmelderin haben nun ergeben, dass mitunter Bauteile vorkommen, deren Abmessungen schlecht zu dem Rastermaß der Auflagebolzen passen. Insbesondere bei gerundeten Bauteilen oder bei Bauteilen mit Fensterausschnitten kommt es vor, dass einige Auflagebolzen so am Rand des Bauteiles stehen, dass sie nur noch teilweise vom Werkstück abgedeckt sind. Wenn diese Auflagebolzen während des Beschichtungsvorganges in ihrer oberen Position bleiben, wie es bei den bisher bekannten Systemen der Fall ist, kann die Seitenwand des Werkstükkes in diesem Bereich nicht ordnungsgemäß beschichtet werden. Es wäre also wünschenswert, nicht nur wie bisher die unbelegten Auflagebolzen abzusenken, sondern gleichermaßen auch die nur teilweise belegten Auflagebolzen und gegebenenfalls auch solche, die auf Grund ihrer Position hart am Rand des Werkstückes eine ordnungsgemäße Beschichtung gefährden.

Theoretisch könnte dieses Problem dadurch gelöst werden, dass jeder Auflagebolzen mit einem zusätzlichen Ventil versehen wird, um dadurch ein selektives Absenken der nur teilweise belegten oder hart am Rand stehenden Bolzen herbeizuführen. In Anbetracht der großen Anzahl von Auflagebolzen pro Beschichtungsanlage würden dabei aber deren Herstellkosten zu hoch werden.

Deshalb liegt der vorliegenden Erfindung die Aufgabe zu Grunde, ein Auflegersystem zu entwickeln, das bei vertretbaren Kosten eine individuelle, selektive Steuerung der Auflagebolzen gestattet, unabhängig davon, ob ein Auflagebolzen unbelegt oder nur teilweise belegt ist. Des Weiteren soll sich das Auflegersystem durch robusten Aufbau und zuverlässige Funktion auszeichnen.

Diese Aufgabe wird erfindungsgemäß dadurch gelöst, dass sich die Aufiagebolzen in ihrer oberen Position durch seitlich ausfahrbare Klinken formschlüssig an der Grundplatte abstützen. Die bisher übliche Abstützung durch ein Druckpolster oder durch verlängerbare bzw. unterschiedlich lange Auflagebolzen wird also ersetzt durch seitlich ausfahrbare Klinken.

Hierdurch ergibt sich eine wesentlich einfachere Selektion zwischen den in der oberen Trageposition verbleibenden Auflagebolzen einerseits und den abzusenkenden Auflagebolzen andererseits, denn die Klinken, die die Auflagebolzen in ihrer oberen Position halten, können wesentlich kostengünstiger betätigt werden als dies bei den herkömmlichen Auflagebolzen, die sich entweder über ein Druckluftpolster oder über unterschiedlich lange Hebelarme abstützen, der Fall ist.

Besonders günstig ist es dabei, die Klinken derart schwenkbar zu lagern, dass sie durch ihr Eigengewicht in Richtung auf die formschlüssige Eingriffsposition oder aber in Gegenrichtung belastet sind. Dadurch braucht man zur Betätigung der Klinken in einer Richtung keine speziellen Antriebsmechanismen, weil sie automatisch durch ihr Eigengewicht die gewünschte Bewegung durchführen können.

Es liegt dabei auch im Rahmen der Erfindung, anstelle oder zusätzlich zu dem Eigengewicht mit Federkraft zu arbeiten oder die Klinken mit Zusatzgewichten zu bestücken. Auch eine magnetische Klinken-Betätigung kann zweckmäßig sein.

Grundsätzlich könnten die Klinken in den Auflagebolzen oder aber in der Grundplatte gelagert sein, wobei dann am jeweils anderen Teil entsprechende Aussparungen für den formschlüssigen Eingriff der Klinken vorzusehen sind. Meist ist es aber günstiger, wenn die Klinken in den Auflagebolzen angeordnet, insbesondere in jedem Auflagebolzen zwei Klinken gegenüberhängend pendelnd aufgehängt sind, während die Aussparungen für den Eingriff der Klinken in der Grundplatte angeordnet werden. Die Klinken können dann an ihren einander zugewandten Seiten schräg verlaufende Keilflächen aufweisen, die derart mit einem zentralen Huborgan zusammenwirken, dass das Hochfahren des Huborganes die Klinken entgegen ihrer Gewichtskraft nach außen in die Eingriffsposition drückt. Beim Anheben der Auflagebolzen durch das genannte Huborgan wird dann gleichzeitig der gewünschte Formschluss bei Erreichen der oberen Position der Auflagebolzen herbeigeführt.

Für die Aufhebung des Formschlusses bieten sich dem Fachmann verschiedene Möglichkeiten. Entweder man verlässt sich völlig auf die durch das Eigengewicht und/oder Federkraft begründete Rückstellkraft zum Zurückbewegen der Klinken; dann brauchen die Auflagebolzen lediglich minimal über die obere Position hinaus angehoben werden, um den Reibschluss zwischen den Klinken und den Aussparungen in der Grundplatte aufzuheben. Oder man sorgt durch entsprechende Gestaltung der Klinken sowie der Öffnungen in der Grundplatte, in denen die Auflagebolzen vertikal verfahrbar sind, dafür, dass die Klinken bei einem leichten Anheben der Auflagebolzen über ihre obere Position hinaus zwangsläufig durch die Grundplatte aus der Eingriffsposition heraus nach innen gedrückt werden. Auch in diesem Fall empfiehlt sich aber, die Lagerung der Klinken bezüglich ihres Schwerpunktes so zu positionieren, dass sie durch ihr Eigengewicht in der nach innen geschwenkten Position verbleiben, damit sie nicht beim anschließenden Absenken der Auflagebolzen in die Abstützposition verfahren.

Um das selektive Absenken der unbelegten oder nur teilweise belegten Auflagebolzen zu realisieren, empfiehlt es sich, unter der Grundplatte ein höhenverstellbares Tableau mit Stellgliedern vorzusehen, wobei jedem Auflagebolzen ein Stellglied zugeordnet ist und jedes Stellglied zwischen einer Aktivposition und einer Passivposition verstellbar ist. Dabei werden diejenigen Stellglieder, die einem abzusenkenden Auflagebolzen zugeordnet sind, in ihre Aktivposition verstellt, sodass sie beim Verfahren des Tableaus in Wirkverbindung mit den betreffenden Auflagebolzen gelangen und deren Absenkbewegung auslösen.

Die Selektion der Stellglieder kann durch eine Erkennungsvorrichtung erfolgen, mit der die auf dem Auflegersystem liegenden Werkstücke berührungslos abgetastet werden. Diese Erkennungsvorrichtung betätigt dann nur diejenigen Stellglieder, die den unbelegten, teilbelegten oder zu hart am Rand stehenden Auflagebolzen zugeordnet sind.

Zweckmäßig erfolgt die Betätigung der Stellglieder durch die Erkennungsvorrichtung in der Weise, daß die Stellglieder der abzusenkenden Auflagebolzen in eine höhere Position gebracht werden als die Stellglieder in ihrer Passivposition. Dann kann das selektive Absenken der nicht benötigten Auflagebolzen durch Hochfahren des Stellglied-Tableaus ausgelöst werden, wodurch die abzusenkenden Ablagebolzen geringfügig über ihre obere Position hinaus angehoben und sodann nach unten freigegeben werden.

Für die Erkennungsvorrichtung bieten sich verschiedene Möglichkeiten. Es kann mit einer Zeilenkamera gearbeitet werden, die die Position der Werkstücke auf dem Auflegersystem erfasst und das Bild an einen Rechner liefert, der die Werkstücke der eingespeicherten Position der Auflagebolzen zuordnet und dadurch die abzusenkenden Auflagebolzen ermittelt. Ebenso kann auch mit Einzellichttastern gearbeitet werden, die das Legebild überfahren und an einer Referenzreihe erkennen, wo die Werkstücke im Verhältnis zu den Auflagebolzen liegen. Besonders zweckmäßig ist es aber, wenn das Legebild durch einen Scanner erfasst wird. Dieser Scanner wird mit seiner Abtasteinheit über den auf dem Auflegersystem verlegten Werkstücken derart verfahren, daß dabei alle Werkstücke und ihre Zuordnung zu den Auflagebolzen erfaßt werden. Diese Erfassung kannüber reflektierte Strahlen erfolgen, die in einer Empfangseinrichtung des Scanners gemessen werden. Aus dem so erfaßten Legebild und seiner Zuordnung zu den Auflagebolzen können dann automatisch diejenigen Auflagebolzen bestimmt werden, die abgesenkt werden sollen.

Alternativ besteht für die Selektion der Auflagebolzen schließlich noch die Möglichkeit eines computererzeugten Legebildes. Dabei legt der Computer die Belegung in der Weise fest, daß die maximale Anzahl von Werkstücken auf der Legestation untergebracht werden kann. Die nicht benötigten Auflagebolzen werden dann nach einem Rechnerprogramm abgesenkt.

Die konstruktive Ausgestaltung der Grundplatte mit den Öffnungen für die Auflagebolzen kann in üblicher Weise erfolgen. Als besonders zweckmäßig hat es sich aber erwiesen, wenn die Grundplatte durch ein Rechteckgitter gebildet wird, das aus Längs- und Querstreben besteht. Diese Längs- und Querstäben haben an den Kreuzungspunkten passende Aussparungen, so daß sie dort zusammengesteckt werden können, wodurch sich automatisch die Öffnungen für die Auflagebolzen an der richtigen Position ergeben.

Weitere Merkmale und Vorteile der Erfindung ergeben sich aus der nachfolgenden Beschreibung eines Ausführungsbeispiels anhand der Zeichnung; dabei zeigt
- Figur 1: einen Querschnitt durch das Auflegersystem mit einem aufgelegten Werkstück;
- Figur 2: eine Ausschnittvergrößerung von Figur 1 ohne Werkstück;
- Figur 3: eine Seitenansicht der Gesamtanlage;
- Figur 4: einen Querschnitt durch das Auflegersystem mit Scannerleiste und Stellgliedtableau und
- Figur 5: eine Ansicht entsprechend Figur 4 nach Betätigung der Stellglieder.

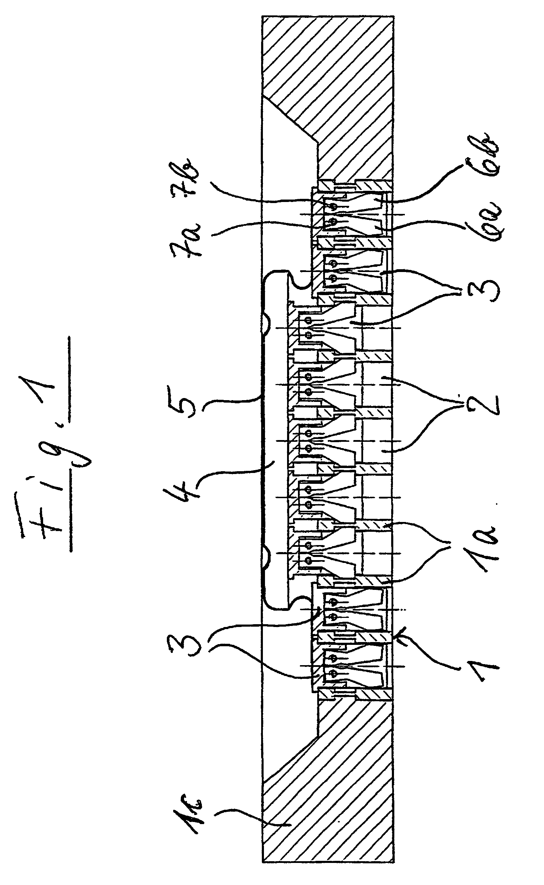

In Figur 1 erkennt man eine Grundplatte 1 in Form eines Rechteckgitters aus zahlreichen sich kreuzenden Längs- und Querstäben, wobei in der Zeichnung nur die Längsstäbe 1a sichtbar sind. Die genannten Längs- und Querstäbe bilden eine Vielzahl von Öffnungen 2, in denen jeweils Auflagebolzen 3 vertikal verschiebbar gelagert sind.

Die Grundplatte 1 ist von einem Dichtrahmen 1c umgeben zur Abdichtung nach außen beim Beschichtungsvorgang in der Presse. Die Gesamtheit aus Grundplatte 1 und Rahmen 1c wird als Palette bezeichnet.

Einige der Auflagebolzen 3 stehen nach oben vor und tragen an ihrer Oberseite gemeinsam ein Werkstück 4. Dieses Werkstück soll mit einer Folie 5 beschichtet werden, und zwar nicht nur an der Oberseite, sondern auch an den Vertikalseiten. Aus diesem Grund muß das Werkstück 4 gegenüber der Grundplatte 1 angehoben werden und es muß sichergestellt sein, daß die am Rand liegenden Auflagebolzen, die von dem Werkstück 4 nur teilweise bedeckt werden, in der gezeigten unteren Passivposition verbleiben, weil sie andernfalls die Beschichtung an den vertikalen Seitenenden des Werkstückes behindern würden.

In der Praxis hat man sich die Grundplatte 1 mit wesentlich mehr Auflagebolzen 3 vorzustellen, so daß eine Vielzahl von Werkstücken 4 auf die Grundplatte 1 aufgelegt und gleichzeitig beschichtet werden. Die Werkstücke 4 können dabei völlig unterschiedliche Abmessungen und Konturen aufweisen.

Jeder Auflagebolzen 3 enthält, wie aus Figur 2 deutlicher erkennbar ist, zwei Klinken 6a und 6b, die an ihrem oberen Bereich schwenkbar in dem Auflagebolzen aufgehängt sind. Die Schwenklagerungen sind mit 7a und 7b bezeichnet.

Die Geometrie und Gewichtsverteilung der Klinken ist bezüglich ihrer Schwenklager 7a bzw. 7b so gewählt, daß die unteren Schenkel der Sperrklinken durch ihr Eigengewicht bestrebt sind, nach innen zu verschwenken, also in diejenige Position, die bei den abgesenkten Auflagebolzen am Rand der Lochplatte gezeigt ist. Dazu liegt der Schwerpunkt S jeder Klinke 6a und 6b weiter außen als das zugehörige Schwenklager 7a bzw. 7b.

Desweiteren erkennt man in Figur 2, daß die unteren Schenkel der Klinken etwa horizontale Sperrflächen 8a und 8b aufweisen und daß diese Sperrflächen mit Ausnehmungen 9 in den Öffnungen 2 der Grundplatte 1 korrespondieren. Somit ist es möglich, die Auflagebolzen 3 durch Spreizung der Klinken 6a und 6b in einer angehobenen Position in der Grundplatte abzustützen. Das Gewicht der von diesen angehobenen Auflagebolzen getragenen Werkstücke wird also direkt auf die Grundplatte übertragen.

Schließlich erkennt man in Figur 2, daß die Klinken an ihren einander zugewandten Seiten Keilflächen 10a und 10b aufweisen, die nach oben aufeinanderzulaufen. Ober diese Keilflächen können die Klinken von ihrer natürlichen, innenliegenden Position nach außen in die Blockierstellung gedrückt werden. Dies erfolgt mit einer Hubplatte 11, die an ihrer Oberseite unterhalb jedes Auflagebolzens 3 einen Dorn 12 trägt. Beim Anheben der Hubplatte 11 fahren die Dorne zwischen die Klinken 6a und 6b, heben diese an und drücken sie gleichzeitig nach außen. Bei Erreichen der oberen, die Werkstücke in der Bearbeitungsposition tragenden Position schnappen die Klinken 6a und 6b dann mit ihren Anschlagflächen 8a und 8b in die Ausnehmungen 9 der Grundplatte ein und halten die Auflagebolzen 3 in ihrer oberen Position. Diese Position wird auch dann beibehalten, wenn die Hubplatte 11 wieder nach unten fährt. Man hat sich also nach diesem Betriebszyklus auch die beiden äußeren, in der abgesenkten Position dargestellten Auflagebolzen 3 in ihrer oberen Position vorzustellen.

Figur 3 verdeutlicht die einzelnen Bearbeitungsstufen, die die Grundplatte 1 durchläuft.

Begonnen wird am sogenannten Legeplatz, wo die Grundplatte 1 mit den zu beschichtenden Werkstücken 4 belegt wird. Geht man davon aus, daß sich nicht das gleiche Legebild ergibt wie bei der vorangegangenen Beschichtung, so muß eine erneute Selektion zwischen den belegten Auflagebolzen einerseits und den unbelegten oder nur teilweise belegten Auflagebolzen andererseits durchgeführt werden. Dazu werden zunächst alle Auflagebolzen in die angehobene Position gebracht. Dies geschieht zweckmäßig schon in der Entleerungsstation oder beim Palettenrücklauf unter der Presse. Die Werkstücke werden dann auf die angehobenen Auflagebolzen gelegt und so arrangiert, daß unter Einhaltung eines gewissen Mindestabstandes möglichst viele Werkstücke untergebracht werden können.

Nach dem Belegen wird die Position der einzelnen Werkstücke im Verhältnis zu den Auflagebolzen erfaßt und registriert. Hierzu dient eine Erkennungsvorrichtung in Form einer Scannerleiste 13. Diese Scannerleiste 13 ist horizontal über der Grundplatte verfahrbar und steuert eine mit ihr verbundene, weiter unten angeordnete und mit der Scannerleiste verfahrbare Betätigungsleiste 14. Die Betätigungsleiste 14 wirkt ihrerseits mit einem Tableau 15 zusammen, das unterhalb der Grundplatte 1 angeordnet ist und unter jedem Auflagebolzen 3 ein Stellglied 16 aufweist.

Zur weiteren Funktionsbeschreibung sei auf Figur 4 verwiesen. Man sieht dort, wie die Scannerleiste 13 und die Betätigungsleiste 14 an einem gemeinsamen Schlitten angeordnet sind und aus der in durchgezogenen Linien dargestellten rechten Position in die gestrichelte linke Position verfahren werden können, um die auf der Grundplatte verteilten Werkstücke 4 hinsichtlich ihrer Zuordnung zu den einzelnen Auflagebolzen 3 zu erfassen. Außerdem erkennt man, daß die Stellglieder 16 auf dem Tableau 15 jeweils aus einem Winkel mit ungleichlangen Schenkeln bestehen. Sie sind normalerweise so ausgerichtet, daß der nach oben ragende Schenkel der kürzere, der quer dazu abstehende Schenkel der längere ist. Im Schnittbereich beider Schenkel sind die Winkel um eine Horizontalachse schwenkbar gelagert.

Jedes mal, wenn nun die Scannerleiste 13 unbelegte oder nur teilweise belegte Auflagebolzen 3 überfährt, wird die darunter befindliche Betätigungsleiste 14 lokal so aktiviert, daß sie die unter den unbedeckten oder nur teilweise bedeckten Auflagebolzen befindlichen Stellglieder 16 um 90° verschwenkt. Diese Verschwenkung wird durch Betätigungselemente 14a der Betätigungsleiste 14 bewirkt, indem diese Betätigungselemente bei den umzulegenden Stellgliedern 16 ― ausgelöst durch die Scannerleiste 13 ― ein Stück nach unten fahren, dadurch am kurzen Schenkel des Betätigungsgliedes 16 anstoßen und es um 90° verdrehen.Gelöscht wird, indem die Betätigungsleiste mit hochgefahrenen Betätigungselementen 14a zurück in die Ausgangsstellung fährt.

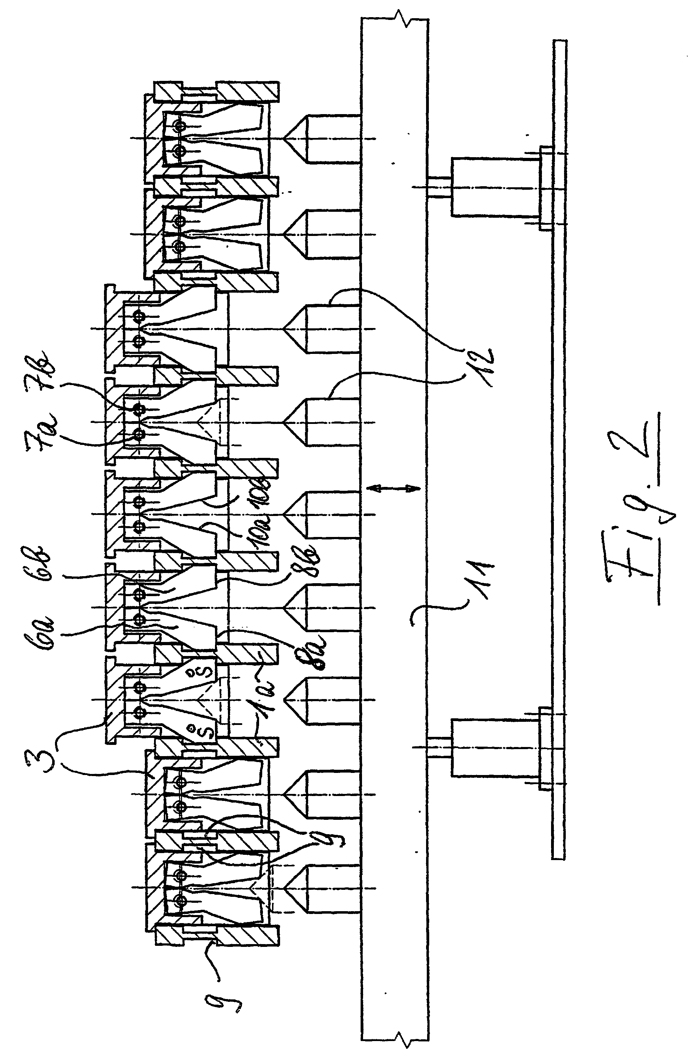

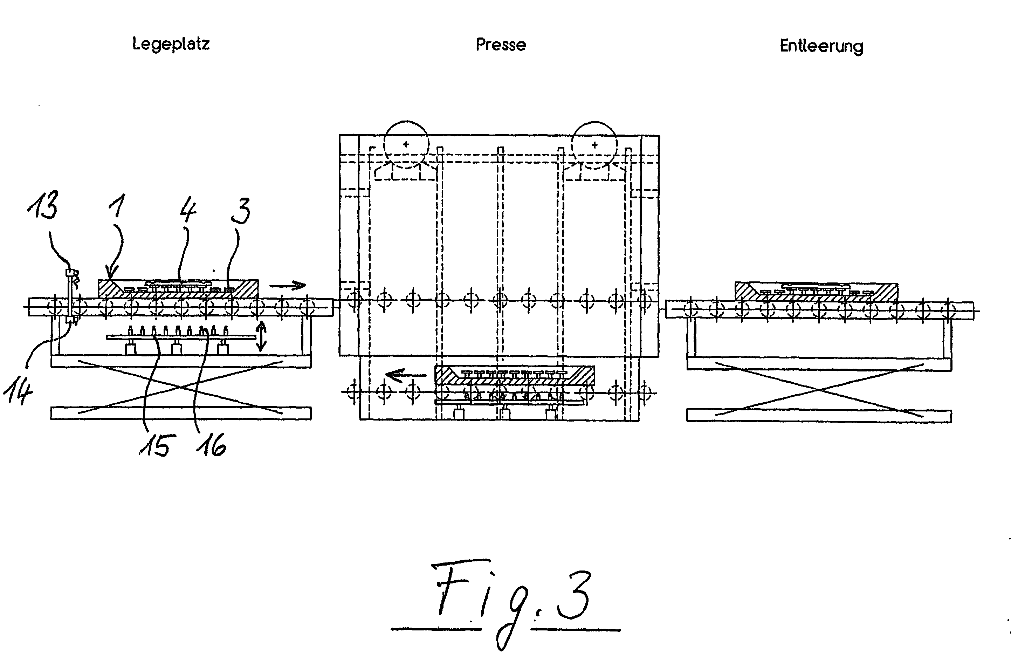

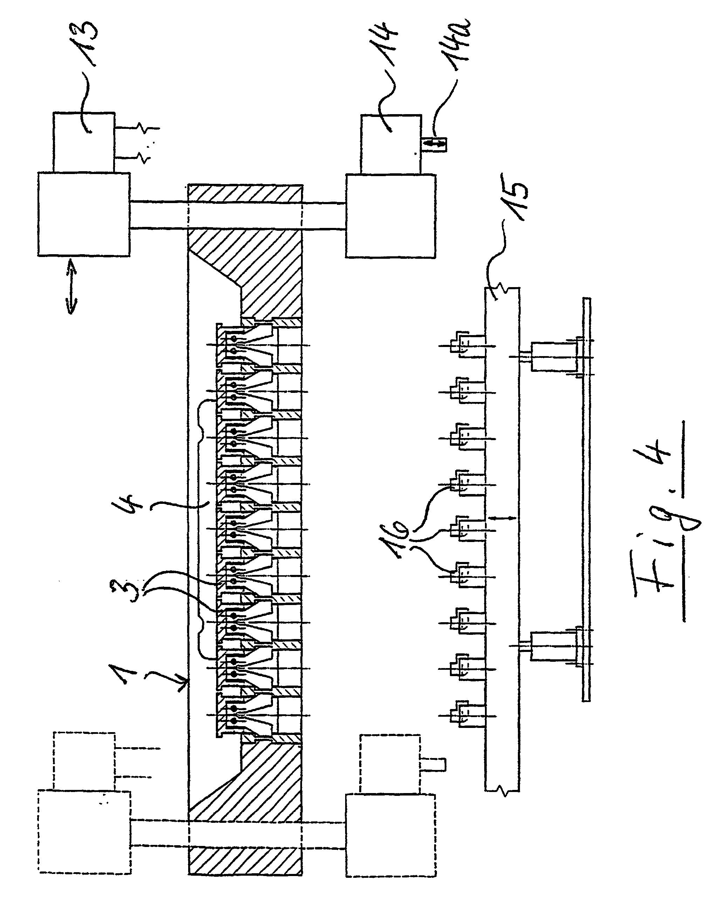

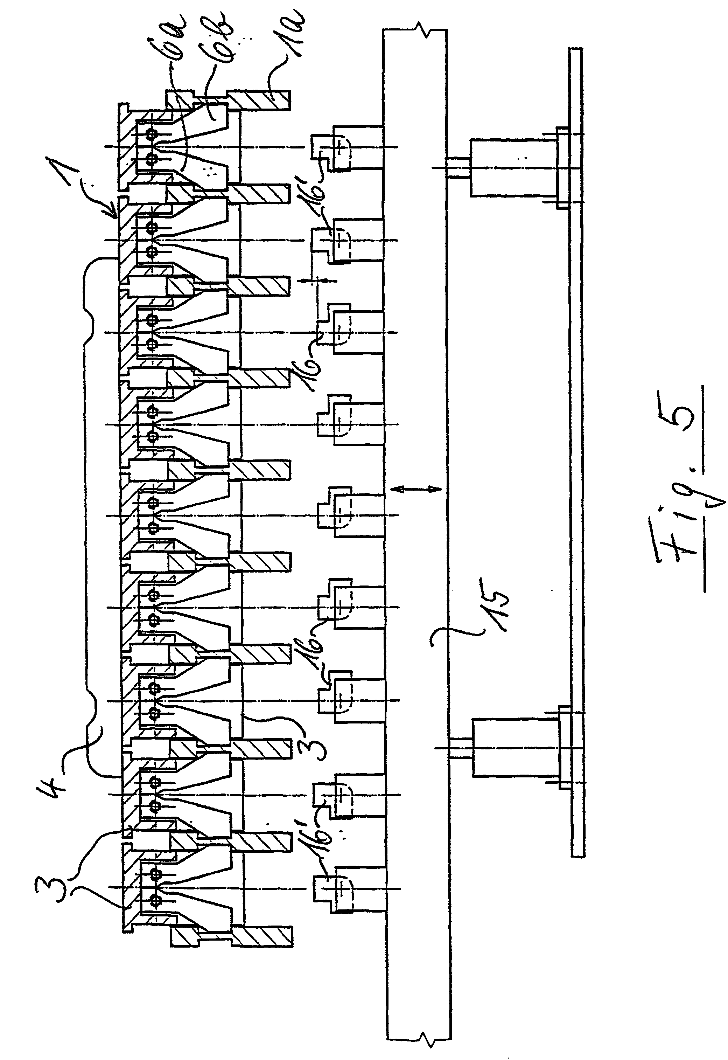

Der sich nach der Selektion einstellende Zustand ist in Figur 5 dargestellt. Man erkennt dort, daß bei allen unbelegten oder nur teilweise belegten Auflagebolzen die darunter befindlichen Stellglieder 16' verschwenkt worden sind, so daß ihr längerer Schenkel nach oben ragt. Diese unbelegten Stellglieder 16' brauchen nur wenige Millimeter weiter nach oben zu ragen als die übrigen Stellglieder 16.

Sodann wird das Stellgliedtableau 15 soweit hochgefahren, daß die Stellglieder 16 nahezu am unteren Rand der Auflagestempel 3 anstoßen. Die umgelegten, höheren Stellglieder 16' stoßen jedoch schon vorher an den ihnen zugeordneten Auflagebolzen 3 an, heben diese einige Millimeter über die gezeichnete Position hoch, so daß ihre Klinken 6a und 6b von der formschlüssigen Anlage in den Ausnehmungen 9 befreit werden und durch ihr Eigengewicht, wie auch durch die oberhalb der Ausnehmungen 9 erkennbare Querschnittsverengung zwangsweise nach innen geschwenkt werden.

Beim anschließenden Absenken des Stellgliedtableaus 15 sinken dann diese unbelegten oder nur teilweise belegten Auflagebolzen in ihre untere Passivposition ― entsprechend dem in Figur 1 dargestellten Zustand.

Auf die derart vorbereitete Palette mit ihren Werkstücken 4 wird dann die Beschichtungsfolie 5 aufgelegt und die so gebildete Einheit wird komplett in die Presse überführt, vergl. Figur 3. Dort findet in an sich bekannter Weise durch Hitze und Druck ― gegebenenfalls mit Hilfe einer nicht dargestellten Membran - der Beschichtungsvorgang statt.

Schließlich wird die Palette mit den beschichteten Werkstücken in die Entleerungsstation überführt, wo die Werkstücke durch Aufschneiden der Folie vereinzelt werden. Nach dem schon beschriebenen Hochfahren aller Auflagebolzen 3, was vorzugsweise schon beim Palettenrücklauf unterhalb der Presse stattfindet, wird die leere Palette erneut zum Legeplatz zurücktransportiert, worauf sich der beschriebene Vorgang wiederholt.

Es liegt im Rahmen der Erfindung, die Höhenverstellung der Stellglieder 16 nicht durch eine Verschwenkung herbeizuführen, sondern anstelle der beschriebenen Winkel ein vertikal verfahrbares Element vorzusehen, das etwa über einen Nocken oder einen Hubmagnet, insbesondere einen Klappankermagnet in die obere Stellung gebracht werden kann. Auch kann es zweckmäßig sein, die Stellglieder nicht mechanisch abzufahren und dabei zu verstellen, sondern sie elektrisch, insbesondere über ein Bussystem anzusteuern, was deutlich schneller ist.

Ebenso liegt es aber auch im Rahmen der Erfindung, die unbelegten Auflagebolzen überhaupt nicht maschinell abzusenken, sondern manuell, indem man sie einfach kurz anhebt, so daß die Klinken 6 a und 6 b aus der gespreizten Position nach innen schwenken und ihr formschlüssiger Eingriff an der Grundplatte 1 aufgehoben wird. Dieses manuelle Absenken der unbelegten Auflagebolzen kommt dann in Betracht, wenn die Grundplatte fast vollständig mit Werkstücken belegt ist, so daß nur wenige Auflagebolzen unbelegt bleiben und abgesenkt werden müssen.

Bei der Massenproduktion, d.h., wenn zahlreiche Beschichtungen mit gleichem Legebild aufeinanderfolgen, besteht eine vorteilhafte Weiterbildung darin, nach der erstmaligen Selektion alle weiteren Selektionen abzuschalten. Man spart dadurch das Überfahren des Legebildes mit der Erkennungsvorrichtung wie auch das lokale Absenken der Auflagebolzen und kann direkt nach dem Belegen der Palette mit den Werkstücken die Folie auflegen.

Daneben besteht auch die Möglichkeit eine Vorselektion durch einen Rechner durchzuführen, wobei dann die Werkstücke auf die obenstehenden Auflagebolzen aufgelegt werden.

Zusammenfassend zeichnet sich die Erfindung dadurch aus, daß man durch eine kostengünstige automatische Steuerung auch solche Auflagebolzen deaktivieren, d. h. nach unten fahren kann, die noch teilweise von einem Werkstücke belegt sind oder die sogar total von einem Werkstück abgedeckt sind, aber so hart am Rand stehen, daß sie dessen Beschichtung gefährden.

## Patentansprüche

1. Vorrichtung zum Bearbeiten plattenförmiger Werkstücke (4), insbesondere zur Beschichtung von Möbelteilen, mittels eines Auflegersystems, das eine Grundplatte (1) mit zahlreichen Öffnungen (2) aufweist, in denen Auflagebolzen (3) zur Aufnahme der Werkstücke (4) zumindest zwischen einer unteren passiven Position und einer oberen, die Werkstücke in ihrer Bearbeitungsposition tragenden Position verfahrbar sind, wobei die Position der Auflagebolzen (3) auch davon abhängt, ob sie von einem Werkstück (4) belegt sind oder nicht,
**dadurch gekennzeichnet,**
**daß** sich die Auflagebolzen (3) in ihrer oberen Position durch seitlich ausfahrbare Klinken (6a, 6b) formschlüssig an der Grundplatte (1) abstützen.

2. Vorrichtung nach Anspruch 1,
**dadurch gekennzeichnet,**
**daß** die Klinken (6a, 6b) derart schwenkbar gelagert sind, daß sie durch ihr Eigengewicht und/oder durch Federkraft in Richtung auf die formschlüssige Eingriffsposition oder in Gegenrichtung belastet sind.

3. Vorrichtung nach Anspruch 1,
**dadurch gekennzeichnet,**
**daß** die Klinken (6a, 6b) in den Auflagebolzen (3) gelagert sind und daß die Grundplatte (1) Aussparungen (9) für den Eingriff der Klinken (6a, 6b) aufweist.

4. Vorrichtung nach Anspruch 1,
**dadurch gekennzeichnet,**
**daß** zwei Klinken (6a, 6b) gegenüberhängend in jedem Auflagebolzen (3) pendelnd aufgehängt sind.

5. Vorrichtung nach Anspruch 1,
**dadurch gekennzeichnet,**
**daß** die Klinken (6a, 6b) an ihren einander zugewandten Seiten Keilflächen (10a, 10b) zur Aufspreizung in die Eingriffsposition durch ein zentrales Huborgan (12) aufweisen.

6. Vorrichtung nach Anspruch 1,
**dadurch gekennzeichnet,**
**daß** die Klinken (6a, 6b) beim Anheben der Auflagebolzen (3) aus der Eingriffsposition heraus durch die Grundplatte (1) nach innen gedrückt werden.

7. Vorrichtung nach Anspruch 1,
**dadurch gekennzeichnet,**
**daß** sie eine Einrichtung zum selektiven Absenken unbelegter und teilweise belegter Auflagebolzen (3) aufweist.

8. Vorrichtung nach Anspruch 7,
**dadurch gekennzeichnet,**
**daß** sie ein Tableau (15) mit Stellgliedern (16) zum selektiven Absenken unbelegter und teilweise belegter Auflagebolzen (3) aufweist und daß jedem Auflagebolzen (3) ein Stellglied (16) zugeordnet ist.

9. Vorrichtung nach Anspruch 87,
**dadurch gekennzeichnet,**
**daß** die Stellglieder (16) zwischen einer Aktivposition und einer Passivposition verstellbar sind.

10. Vorrichtung nach Anspruch 7,
**dadurch gekennzeichnet,**
**daß** die Selektion der Stellglieder (16) mit Hilfe einer die auf dem Auflegersystem liegenden Werkstücke (4) berührungslos abtastende Erkennungsvorrichtung (13, 14) erfolgt.

11. Vorrichtung nach Anspruch 10,
**dadurch gekennzeichnet,**
**daß** die Erkennungsvorrichtung (13, 14) diejenigen Stellglieder (16) betätigt, die den unbelegten und teilweise belegten Auflagebolzen (3) zugeordnet sind.

12. Vorrichtung nach Anspruch 10,
**dadurch gekennzeichnet,**
**daß** die Erkennungsvorrichtung (13, 14) im Sinne einer Höhenänderung auf die Stellglieder (16) einwirkt.

13. Vorrichtung nach Anspruch 10,
**dadurch gekennzeichnet,**
**daß** die Erkennungsvorrichtung (13, 14) eine Scannerleiste (13) und eine mit ihr verfahrbare Betätigungsleiste (14) aufweist.

14. Vorrichtung nach Anspruch 1,
**dadurch gekennzeichnet,**
**daß** das selektive Absenken unbelegter und teilweise belegter Auflagebolzen (3) durch leichtes Anheben über ihre obere Position hinaus ausgelöst wird.

15. Vorrichtung nach Anspruch 7,
**dadurch gekennzeichnet,**
**daß** die Einrichtung zum selektiven Absenken ausschaltbar ist.

16. Vorrichtung nach Anspruch 1,
**dadurch gekennzeichnet,**
**daß** die Grundplatte (1) durch ein Rechteckgitter aus Längs- und Querstäben (1a) gebildet ist.

## Claims

1. Device for processing board-shaped workpieces (4), especially for coating items of furniture, by means of a feed system which comprises a base plate (1) having numerous openings (2) in which support pins (3) for receiving the workpieces (4) are movable at least between a lower passive position and an upper position in which they support the workpieces in their processing position, the position of the support pins (3) also being dependent upon whether or not they are occupied by a workpiece (4),
**characterised in that**
the support pins (3) in their upper position are supported interlockingly on the base plate (1) by laterally extensible catches (6a, 6b).

2. Device according to claim 1,
**characterised in that**
the catches (6a, 6b) are pivotally mounted in such a manner that they are biased in the direction towards the interlocking engagement position or in the opposite direction by their own weight and/or by resilience.

3. Device according to claim 1,
**characterised in that**
the catches (6a, 6b) are mounted in the support pins (3), and the base plate (1 ) has recesses (9) for engagement of the catches (6a, 6b).

4. Device according to claim 1,
**characterised in that**
two catches (6a, 6b) are suspended in pendulum-like manner to hang opposite one another in each support pin (3).

5. Device according to claim 1,
**characterised in that**
the catches (6a, 6b) have on their sides that face one another tapering faces (10a, 10b) for the purpose of being spread apart into the engagement position by a central lifting element (12).

6. Device according to claim 1,
**characterised in that**
when the support pins (3) are raised, the catches (6a, 6b) are pressed inwards out of the engagement position by the base plate (1).

7. Device according to claim 1,
**characterised in that**
it has an arrangement for selectively lowering unoccupied and partly covered support pins (3).

8. Device according to claim 7,
**characterised in that**
it has a platform (15) having actuators (16) for selectively lowering unoccupied and partly covered support pins (3), and each support pin (3) is associated with an actuator (16).

9. Device according to claim 7,
**characterised in that**
the actuators (16) are displaceable between an active position and a passive position.

10. Device according to claim 7,
**characterised in that**
the selection of the actuators (16) is effected with the aid of a recognition device (13, 14) which carries out contactless scanning of the workpieces (4) located on the feed system.

11. Device according to claim 10,
**characterised in that**
the recognition device (13, 14) operates those actuators (16) which are associated with the unoccupied and partly covered support pins (3).

12. Device according to claim 10,
**characterised in that**
the recognition device (13, 14) acts on the actuators (16) in the sense of a change in height.

13. Device according to claim 10,
**characterised in that**
the recognition device (13, 14) has a scanner bar (13) and an operating bar (14) that is movable therewith.

14. Device according to claim 1,
**characterised in that**
the selective lowering of unoccupied and partly covered support pins (3) is initiated by slightly raising them beyond their upper position.

15. Device according to claim 7,
**characterised in that**
the arrangement for selective lowering is disconnectable.

16. Device according to claim 1,
**characterised in that**
the base plate (1) is formed by a rectangular grid of longitudinal and transverse bars (1a).

## Revendications

1. Dispositif pour le traitement de pièces (4) en forme de plaques, en particulier pour le revêtement d'éléments de meubles, au moyen d'un système de support qui présente une plaque de base (1) pourvue de nombreuses ouvertures (2), dans lesquelles des broches de support (3) peuvent être déplacées, afin de recevoir les pièces (4), au moins entre une position passive inférieure et une position supérieure portant les pièces dans leur position d'usinage, la position des broches de support (3) dépendant également du fait qu'elles sont ou non occupées par une pièce (4),
**caractérisé en ce que** les broches de support (3), dans leur position supérieure, s'appuient par engagement positif contre la plaque de base (1) par des cliquets (6a, 6b) pouvant être déployés latéralement.

2. Dispositif selon la revendication 1, **caractérisé en ce que** les cliquets (6a, 6b) sont montés à pivotement de telle sorte qu'ils sont sollicités, par leur propre poids et/ou par force de ressort, en direction de la position d'engagement positif ou en direction contraire.

3. Dispositif selon la revendication 1, **caractérisé en ce que** les cliquets (6a, 6b) sont montés dans les broches de support (3), et **en ce que** la plaque de base (1) présente des évidements (9) pour l'engagement des cliquets (6a, 6b).

4. Dispositif selon la revendication 1, **caractérisé en ce que** deux cliquets (6a, 6b) sont montés oscillants en antagonisme dans chaque broche de support (3).

5. Dispositif selon la revendication 1, **caractérisé en ce que** les cliquets (6a, 6b) présentent, sur leurs côtés en vis-à-vis, des faces biaises (10a, 10b) afin d'être écartés dans la position d'engagement par un organe de levage central (12).

6. Dispositif selon la revendication 1, **caractérisé en ce que** les cliquets (6a, 6b), lors d'un soulèvement des broches de support (3), sont pressés vers l'intérieur hors de la position d'engagement par la plaque de base (1).

7. Dispositif selon la revendication 1, **caractérisé en ce qu'**il présente un équipement pour abaisser sélectivement des broches de support (3) non occupées et partiellement occupées.

8. Dispositif selon la revendication 7, **caractérisé en ce qu'**il présente un tableau (15) avec des organes de commande (16) pour abaisser sélectivement des broches de support (3) non occupées et partiellement occupées, et **en ce qu'**un organe de commande (16) est associé à chaque broche de support (3).

9. Dispositif selon la revendication 8, **caractérisé en ce que** les organes de commande (16) peuvent être déplacés entre une position active et une position passive.

10. Dispositif selon la revendication 7, **caractérisé en ce que** la sélection des organes de commande (16) s'effectue à l'aide d'un dispositif de reconnaissance (13, 14) balayant sans contact les pièces (4) placées sur le système de support.

11. Dispositif selon la revendication 10, **caractérisé en ce que** le dispositif de reconnaissance (13, 14) actionne les organes de commande (16) qui sont associés aux broches de support (3) non occupées et partiellement occupées.

12. Dispositif selon la revendication 10, **caractérisé en ce que** le dispositif de reconnaissance (13, 14) agit sur les organes de commande (16) pour modifier leur hauteur.

13. Dispositif selon la revendication 10, **caractérisé en ce que** le dispositif de reconnaissance (13, 14) présente une barre de scanner (13) et une barre d'actionnement (14) conjointement mobile.

14. Dispositif selon la revendication 1, **caractérisé en ce que** l'abaissement sélectif des broches de support (3) non occupées et partiellement occupées est déclenché par un léger soulèvement au-delà de leur position supérieure.

15. Dispositif selon la revendication 7, **caractérisé en ce que** l'équipement d'abaissement sélectif peut être désactivé.

16. Dispositif selon la revendication 1, **caractérisé en ce que** la plaque de base (1) est formée par une grille rectangulaire constituée de barreaux (1a) longitudinaux et transversaux.
